Europäisches Patentamt

European Patent Office

Office européen des brevets

(19)

(11) Numéro de publication : **0 015 822**
**B1**

(12) **FASCICULE DE BREVET EUROPÉEN**

(45) Date de publication du fascicule du brevet :
30.03.83

(21) Numéro de dépôt : **80400266.5**

(22) Date de dépôt : **26.02.80**

(51) Int. Cl.³ : **G 01 N 27/90**

(54) **Appareil numérique pour le contrôle de pièces par courants de Foucault.**

(30) Priorité : **09.03.79 FR 7906149**

(43) Date de publication de la demande :
**17.09.80 Bulletin 80/19**

(45) Mention de la délivrance du brevet :
**30.03.83 Bulletin 83/13**

(84) Etats contractants désignés :
**BE CH DE GB IT**

(56) Documents cités :
**FR A 1 335 569**
**FR A 2 010 781**
**FR A 2 298 103**
**US A 3 337 796**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Da Costa Vieira, David**
**89, Village du Soleil**
**F-13540 Puyricard (FR)**
Inventeur : **Dinard, Jacques**
**"Les Lavandes", Bât. D Rue Léon Mure**
**F-04100 Manosque (FR)**
Inventeur : **Stössel, Alain**
**Les Hauts de Provence, Bât. E Avenue A.Capus**
**F-13100 Aix en Provence (FR)**

(74) Mandataire : **Mongrédien, André et al**
**c/o BREVATOME 25, rue de Ponthieu**
**F-75008 Paris (FR)**

EP 0 015 822 B1

Jouve, 18, rue St-Denis, 75001 Paris, France

# 0 015 822

Appareil numérique pour le contrôle de pièces par courants de Foucault

La présente invention a pour objet un appareil numérique pour le contrôle de pièces par courants de Foucault. Elle trouve une application dans le contrôle non destructif.

On sait que le contrôle d'une pièce métallique par courants de Foucault consiste en l'étude des variations des courants induits dans cette pièce par le champ magnétique d'un enroulement primaire parcouru par un courant d'excitation alternatif. Ces courants induits produisent, en retour, un champ qui s'oppose au champ inducteur et qui agit sur l'impédance d'un enroulement secondaire. L'ensemble des enroulements primaire et secondaire constitue le capteur dans lequel ou en face duquel, se déplace la pièce à contrôler. Tout défaut de cette dernière, qui se présente au niveau du capteur (changement de dimension, variation de conductivité électrique, variation de perméabilité magnétique, criques, etc...) modifie la phase et l'intensité des courants de Foucault et, corrélativement, change l'impédance de l'enroulement secondaire.

Pour des raisons de sensibilité le bobinage récepteur est en fait composé de deux enroulements secondaires connectés en opposition, de telle sorte que le signal de mesure soit la tension de déséquilibre des deux enroulements. La mesure est différentielle si les deux enroulements examinent deux zones adjacentes de la pièce à contrôler ; elle est absolue si un seul des deux enroulements est en présence de cette pièce (le second enroulement comporte alors une pièce étalon de référence). La tension délivrée par le capteur est amplifiée, puis analysée dans sa composante résistive (ou réelle) X et dans sa composante réactive (ou imaginaire) Y. La tension alternative délivrée par le capteur est ensuite représentée sur l'écran d'un tube cathodique par un point de coordonnées cartésiennes X et Y.

Du fait de légères asymétries entre les deux parties de l'enroulement secondaire, le capteur délivre, même en l'absence de défaut dans la pièce à contrôler, une tension résiduelle qui peut fausser la mesure. Aussi s'efforce-t-on de supprimer cette tension résiduelle à l'aide d'un circuit auxiliaire de correction ou « d'équilibrage ». Ce circuit comprend d'une part, un générateur de tension d'équilibrage dont la fréquence est égale à celle de la tension d'excitation et dont l'amplitude et la phase sont réglables et, d'autre part, un amplificateur différentiel à deux entrées, l'une recevant la tension d'équilibrage et l'autre la tension délivrée par le capteur. Le réglage de l'amplitude et de la phase de la tension d'équilibrage s'effectue de telle manière qu'en présence d'une pièce réputée bonne, l'amplificateur délivre une tension nulle tout au moins à la fréquence d'excitation. C'est cette tension corrigée qui est finalement analysée. Pour cela, on utilise un circuit qui comprend le plus souvent deux échantillonneurs périodiques travaillant tous deux à la fréquence de la tension d'excitation, mais en quadrature l'un par rapport à l'autre. Ces échantillonneurs reçoivent du générateur de tension d'excitation une impulsion de commande qui transite par une ligne à retard, ce qui permet de régler les instants d'échantillonnage.

Enfin, il est courant, dans de tels appareils, de prévoir un moyen pour faire tourner le point de mesure affiché sur l'écran du tube cathodique. En général, ce moyen consiste en circuits aptes à calculer des quantités de la forme $X \cos \theta - Y \sin \theta$ et $X \sin \theta + Y \cos \theta$, $\theta$ étant l'angle de rotation souhaité.

A propos de ces appareils et moyens particuliers, on pourra se reporter au brevet américain n° 3 229 198 de H. L. LIBBY délivré le 11 janvier 1966 et intitulé : « Eddy Current Nondestructive Testing Device for Measuring Multiple Parameter Variables of a Metal Sample ».

La présente invention a pour objet un appareil de ce type. Mais il est conçu pour fonctionner de préférence dans une gamme de basse ou très basse fréquence : d'environ 1 Hz à environ 3 kHz. Cette gamme correspond à deux domaines d'application, le second étant d'ailleurs plus important que le premier :

1. Contrôle de matériaux non magnétiques :

Utilisé aux fréquences les plus élevées de la gamme (à partir de 1 kHz environ), l'appareil de l'invention permet le contrôle de santé (c'est-à-dire la détection de défauts ponctuels) de produits non magnétiques, mais de conductibilité électrique élevée. Ces produits peuvent se présenter sous forme de tubes, barres, profilés et éventuellement de plaques. On peut également contrôler, sur ces mêmes matériaux, certains paramètres dimensionnels et notamment des épaisseurs lorsque celles-ci sont relativement importantes (plusieurs millimètres).

2. Contrôle de matériaux magnétiques :

La majorité des applications de l'appareil de l'invention concerne la caractérisation structurale de matériaux magnétiques. Dans ce cas, la mesure est toujours absolue et comparative : l'appareil est étalonné par rapport à une pièce de référence. La mesure peut être réalisée, soit avec deux capteurs, l'un deux recevant alors une pièce de référence, soit avec un seul capteur comprenant deux enroulements secondaires, bobinés en sens inverse l'un par rapport à l'autre, seul l'un d'entre eux étant directement en présence de la pièce à contrôler.

L'appareil de l'invention permet de résoudre notamment les problèmes de contrôle suivants :
— Tri de matériaux et plus précisément tri de nuances : l'appareil permet de détecter des différences de composition chimique,

2

**0 015 822**

— Contrôle de traitements thermiques : recuits, trempes, etc...,
— Contrôle d'états mécaniques : évaluation du taux d'écrouissage,
— Corrélation avec des propriétés mécaniques, telles que la dureté,

cette liste n'étant naturellement pas limitative.

Ce mode particulier de fonctionnement de l'appareil de l'invention (à basse fréquence et en mode absolu) nécessite une très grande stabilité de fréquence, aussi bien au niveau de la tension d'excitation du capteur que des moyens de correction et d'échantillonnage du signal délivré par le capteur. Or, les moyens de l'art antérieur ne permettent pas d'obtenir cette grande stabilité.

La présente invention a pour but de remédier à ces inconvénients en proposant une conception particulière du générateur de tension d'excitation, du circuit de correction et du moyen de commande des échantillonneurs. L'invention utilise notamment un générateur numérique de tension. Un tel circuit est en soi connu et décrit par exemple dans le document FR-A-2 298 103 dans le cas de l'excitation d'un circuit résonnant LC. Les moyens utilisés dans l'invention confère à l'appareil des avantages liés à l'augmentation de la finesse d'analyse, à l'amélioration de la reproductibilité des mesures, à la possibilité d'effectuer des étalonnages très précis et enfin à la manière dont on oriente le signal de mesure.

De façon plus précise, la présente invention a pour objet un appareil pour le contrôle de pièces par courants de Foucault, comprenant :

— un capteur constitué par un enroulement primaire et un enroulement secondaire,
— un générateur numérique de tension sinusoïdale d'excitation ayant une fréquence déterminée F, ce générateur alimentant l'enroulement primaire,
— un circuit de correction pour supprimer la tension résiduelle délivrée par l'enroulement secondaire du capteur, ce circuit comprenant un générateur de tension d'équilibrage à la fréquence F de la tension d'excitation et d'amplitude et de phase réglables et un amplificateur différentiel à deux entrées, l'une recevant la tension d'équilibrage et l'autre la tension délivrée par le capteur, et une sortie délivrant une tension de mesure corrigée,
— un circuit d'analyse de la tension de mesure corrigée, ce circuit comprenant deux échantillonneurs travaillant à la fréquence du générateur et en quadrature de phase l'un par rapport à l'autre, ces échantillonneurs étant commandés par des impulsions élaborées par un moyen approprié relié au générateur,
— un moyen pour afficher les deux signaux délivrés par les deux échantillonneurs,

caractérisé en ce que :

A. le générateur de tension d'excitation comprend un oscillateur émettant des impulsions à une fréquence stabilisée $F_s$, un premier compteur de capacité maximale C relié à cet oscillateur, une première mémoire contenant une table de C valeurs numériques de la fonction sinus, cette mémoire étant dressée par le contenu du compteur, un premier convertisseur numérique-analogique connecté à la mémoire, ce convertisseur délivrant une tension sinusoïdale de fréquence $F = F_s/C$ qui est appliquée à l'enroulement primaire,

B. le circuit de correction comprend :

i) un premier moyen réglagle de sélection d'un nombre compris entre O et C, un premier comparateur à deux entrées, l'une reliée à ce premier moyen et l'autre à la sortie du premier compteur du générateur, et à une sortie délivrant une impulsion lorsque les nombres reçus par les deux entrées sont égaux,

ii) un second compteur identique au premier, ce compteur recevant les impulsions délivrées par l'oscillateur du générateur numérique et possédant une entrée de remise à zéro reliée à la sortie du premier comparateur,

iii) une seconde mémoire contenant une table de C valeurs numériques de la fonction sinus, cette mémoire étant adressée par le contenu du second compteur, un second convertisseur numérique-analogique connecté à la mémoire et un potentiomètre réglable relié à la sortie du convertisseur,

C. le moyen pour engendrer des impulsions de commande des échantillonneurs comprend :

i) un second moyen pour sélectionner un nombre compris entre O et C, un second comparateur numérique à deux entrées, l'une reliée à ce second moyen et l'autre au premier compteur du générateur, et à une sortie délivrant une impulsion lorsque les deux nombres reçus par les entrées sont égaux, cette sortie étant reliée directement à l'un des échantillonneurs,

ii) un déphaseur numérique constitué par un troisième compteur relié à l'oscillateur du générateur numérique, ce troisième compteur ayant une entrée de remise à zéro qui est reliée à la sortie du second comparateur, ce troisième compteur ayant une capacité maximale égale à C/4 et possédant une sortie qui délivre une impulsion lorsque son contenu atteint la capacité maximale C/4, cette sortie étant reliée à l'autre échantillonneur.

D'autres caractéristiques et avantages de l'invention apparaîtront mieux après la description qui suit, d'exemples de réalisation donnés à titre explicatif et nullement limitatif. Cette description se réfère à des dessins annexés sur lesquels :

la figure 1 représente le schéma synoptique de l'appareil de l'invention ;

3

la figure 2 représente un mode particulier de réalisation des moyens de formation et d'affichage d'un déphasage des impulsions de commande d'échantillonnage,

la figure 3 représente un mode particulier de réalisation du générateur numérique.

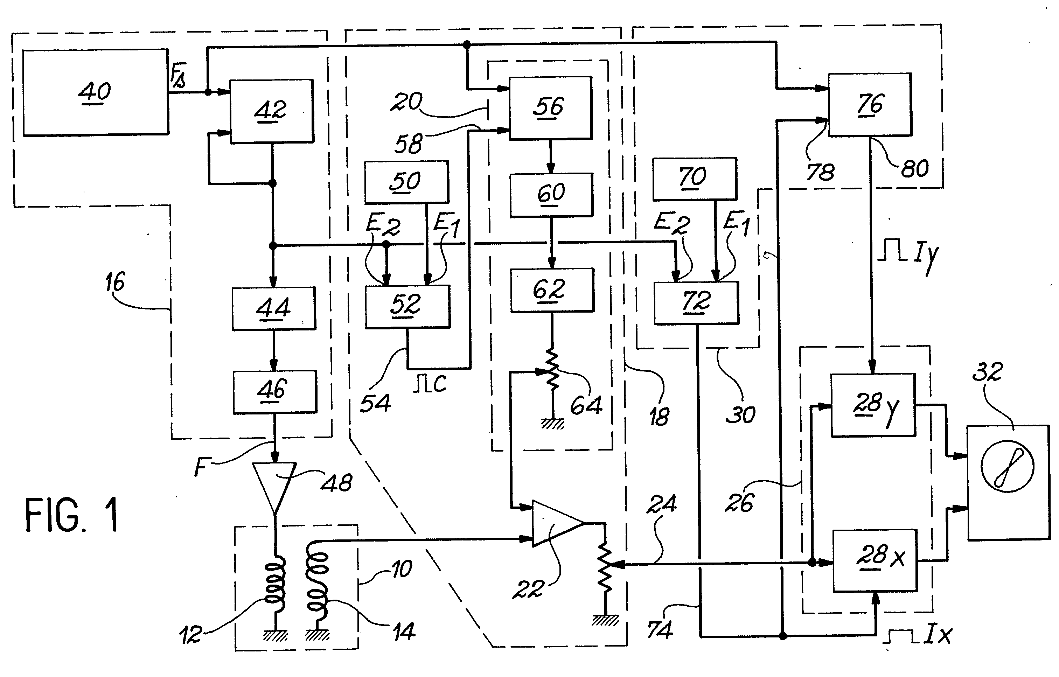

L'appareil représenté sur la fig. 1 comprend :

— un capteur 10 constitué par un enroulement primaire 12 et un enroulement secondaire 14, ce dernier comprenant deux parties connectées en série et en opposition,

— un générateur 16 de tension sinusoïdale d'excitation de l'enroulement primaire à une fréquence F,

— un circuit 18 de correction, destiné à supprimer la tension résiduelle délivrée par l'enroulement secondaire 14 du capteur ; ce circuit 18 comprend un générateur 20 de tension d'équilibrage à la fréquence F de la tension d'excitation et d'amplitude et de phase réglables et un amplificateur différentiel 22 à deux entrées, l'une recevant la tension d'équilibrage et l'autre la tension délivrée par le capteur 10, et une sortie 24 délivrant une tension de mesure corrigée.

— un circuit 26 d'analyse de la tension de mesure corrigée délivrée par l'amplificateur 22, ce circuit comprenant deux échantillonneurs 28X et 28Y travaillant tous deux à la fréquence F du générateur 16, mais en quadrature de phase l'un par rapport à l'autre, ces échantillonneurs sont commandés par des impulsions élaborées par un moyen 30 relié au générateur 16,

— un moyen 32 pour afficher les deux signaux délivrés par les deux échantillonneurs 28X et 28Y.

Une telle structure est aussi celle des appareils de l'art antérieur. Mais l'appareil de l'invention possède des caractéristiques qui lui sont propres et qui concernent :

A. le générateur d'excitation, B. le circuit de correction, C. la commande des échantillonneurs. Ces caractéristiques sont les suivantes :

A. le générateur 16 de tension d'excitation est de type numérique et il comprend un oscillateur 40 émettant des impulsions à une fréquence Fs, un premier compteur 42 de capacité maximale C relié à l'oscillateur 40, une première mémoire 44 contenant une table de C valeurs numériques de la fonction sinus, cette mémoire étant adressée par le contenu du compteur 42 et un premier convertisseur numérique-analogique 46 connecté à la mémoire 44 ; ce convertisseur délivre une tension sinusoïdale amplifiée par un circuit 48, puis appliquée à l'enroulement primaire,

B. le circuit 18 de correction comprend :

i) un premier moyen réglable 50 de sélection d'un nombre compris entre O et C, un premier comparateur 52 à deux entrées $E_1$ et $E_2$, la première reliée au moyen 50, la seconde à la sortie du premier compteur 42 du générateur 16, et à une sortie 54 délivrant une impulsion lorsque les nombres reçus par les deux entrées $E_1$ et $E_2$ sont égaux,

ii) un second compteur 56, identique au compteur 42, ce compteur 56 recevant les impulsions délivrées par l'oscillateur 40 disposé dans le générateur numérique 16. Ce comparateur possède une entrée de remise à zéro 58 reliée à la sortie 54 du premier comparateur 52,

iii) une seconde mémoire 60 contenant une table de C valeurs numériques de la fonction sinus, cette mémoire étant adressée par le contenu du second compteur 56, un second convertisseur numérique-analogique 62 connecté à la mémoire 60 et un potentiomètre 64 réglable relié à la sortie du convertisseur 62,

C. le moyen 30 pour engendrer les impulsions de commande des échantillonneurs 28X et 28Y comprend :

i) un second moyen réglable 70 pour sélectionner un nombre compris entre O et C, un second comparateur numérique 72 à deux entrées $E_1$ et $E_2$, la première reliée au moyen 70, la seconde au compteur 42 du générateur 16, et à une sortie 74 délivrant une impulsion IX lorsque les deux nombres reçus sur les entrées $E_1$ et $E_2$ sont égaux, cette sortie étant reliée directement à l'échantillonneur 28X,

ii) un troisième compteur 76 relié à l'oscillateur 40 du générateur numérique 16 ; ce troisième compteur possède une entrée de remise à zéro 78 qui est reliée à la sortie 74 du second comparateur 72 ; il offre une capacité maximale égale à C/4 ; sa sortie 80 délivre une impulsion IY lorsque le contenu atteint la capacité maximale C/4 ; cette sortie est reliée à l'échantillonneur 28Y.

Pour décrire le fonctionnement de ce circuit, on supposera, à titre illustratif, que la capacité C des compteurs 42 et 56 est égale à 512.

Le fonctionnement du générateur 16, tout d'abord, est le suivant. La mémoire 44 possède 512 points de huit éléments binaires ; cela permet de coder une période complète de sinusoïde avec 512 adresses. Ces 512 adresses sont fournies par le compteur 42 qui possède dix étages, les neuf premiers donnant lesdites adresses ($2^q = 512$) et le dixième permettant d'effectuer la remise à zéro du compteur. Ainsi, une période de sinusoïde est obtenue lorsque 512 impulsions ont été émises par l'oscillateur 40. Si Fs est la fréquence de ces impulsions, la fréquence F du signal sinusoïdal délivré par la mémoire 44 est donc égale à Fs/512.

A titre explicatif, la mémoire 44 peut être du genre REPROM (« Reprogrammable Read Only Memory ») et par exemple constituée par le circuit IM 6604 commercialisé par la Société « INTERSIL ».

Le convertisseur numérique-analogique 46 est prévu pour fonctionner avec un code d'entrée à au moins huit éléments binaires. On peut utiliser les convertisseurs du commerce à douze éléments binaires, les quatre éléments binaires de plus faible poids étant forcés au niveau logique 1.

Si le signal de sortie du convertisseur s'effectue en courant, on ajoute un convertisseur courant-tension réglable. Le circuit DAC 1285 par exemple, de la Société « National Semi-conductor » contient un tel convertisseur numérique-analogique et un convertisseur courant-tension.

La correspondance entre le code d'entrée binaire et la tension de sortie variant entre + V et − V, peut finalement être la suivante :

Code    : 11 111 111   11 111 110   01 111 111   00 000 000
Tension :    − V           − V + ε           O           + V − ε

L'amplificateur 48 ne faisant pas partie de l'invention ne sera pas décrit ici. On indiquera simplement qu'il peut s'agir d'un amplificateur opérationnel, par exemple de type ICH 8520 de la Société « Intersil ».

En ce qui concerne, maintenant, le circuit de correction 18, il comprend tout d'abord un générateur de tension 20 dont le fonctionnement est identique à celui qui vient d'être décrit, puisqu'il comprend un ensemble compteur 56-mémoire 60-convertisseur 62 identique à l'ensemble compteur 42-mémoire 44-convertisseur 46. Mais ce circuit contient aussi un déphaseur numérique dont le fonctionnement est le suivant.

L'origine des phases peut être considérée comme l'instant de remise à zéro du compteur 42. Le comparateur 52 reçoit sur ses entrées $E_1$ et $E_2$ deux nombres $N_1$ et $N_2$, le premier fixe et déterminé par le moyen 50, le second variable et progressant de 0 à 511 avec le contenu du compteur 42. Lorsque $N_2$ atteint $N_1$, la sortie du comparateur 52 change d'état et une impulsion Ic apparaît sur la connexion 54. Cette impulsion est parfaitement calée dans le cycle de 512 coups émis par l'oscillateur 40. Sa position peut être ajustée en faisant varier le nombre $N_1$ sélectionné de 0 à 511. Cette impulsion sert à remettre à zéro le compteur 56 et l'instant de remise à zéro fixe le départ et, par conséquent, la phase de la sinusoïde constituant le signal de correction.

Les 512 coups d'un cycle correspondent ainsi à une possibilité de faire varier de 360° le déphasage de la tension de correction par rapport à la tension d'excitation. Le déphasage exprimé en degré est donc égal à 360 · $N_1$/512.

En ce qui concerne maintenant le circuit 30 de commande des échantillonneurs, son fonctionnement est le suivant.

L'impulsion IX de commande de l'échantillonneur 28X est engendrée exactement de la même façon que l'impulsion Ic de détermination de la phase du signal de correction. En effet, l'ensemble moyen 70-comparateur 72 est identique à l'ensemble moyen 50-comparateur 52 qui vient d'être décrit.

Quant à l'impulsion IY de commande de l'échantillonneur 28Y, elle doit être déphasée d'un quart de période par rapport à l'impulsion IX. Pour cela, l'impulsion IX est adressée sur l'entrée de remise à zéro du compteur 76 dont la capacité est égale à 512/4 = 128. Cette impulsion détermine l'instant de départ du comptage dans le compteur 76. Le passage à 128 de ce compteur commande l'émission, sur la sortie 80, d'une impulsion qui se trouve décalée de 128 coups par rapport à l'impulsion de remise à zéro, c'est-à-dire d'un quart de période. Cette impulsion constitue donc l'impulsion IY nécessaire à la commande de l'échantillonneur 28Y

On observera que le circuit de commande 30 permet non seulement d'engendrer les deux impulsions nécessaires à la commande des échantillonneurs, mais encore d'orienter le signal apparaissant sur l'écran d'affichage. Cette orientation s'obtient en modifiant le nombre $N_1$ sélectionné par le moyen 70. Cette disposition présente en outre l'avantage suivant. Si le signal de mesure présente une distorsion due à une non-linéarité des propriétés magnétiques du matériau en question (pour des amplitudes d'excitation suffisamment importantes) il peut être intéressant d'analyser une zone particulière du signal de mesure. L'appareil de l'invention le permet grâce au réglage de la position de l'impulsion IX et corrélativement de l'impulsion IY. Le choix de la position des signaux d'échantillonnage devient alors un élément supplémentaire d'analyse.

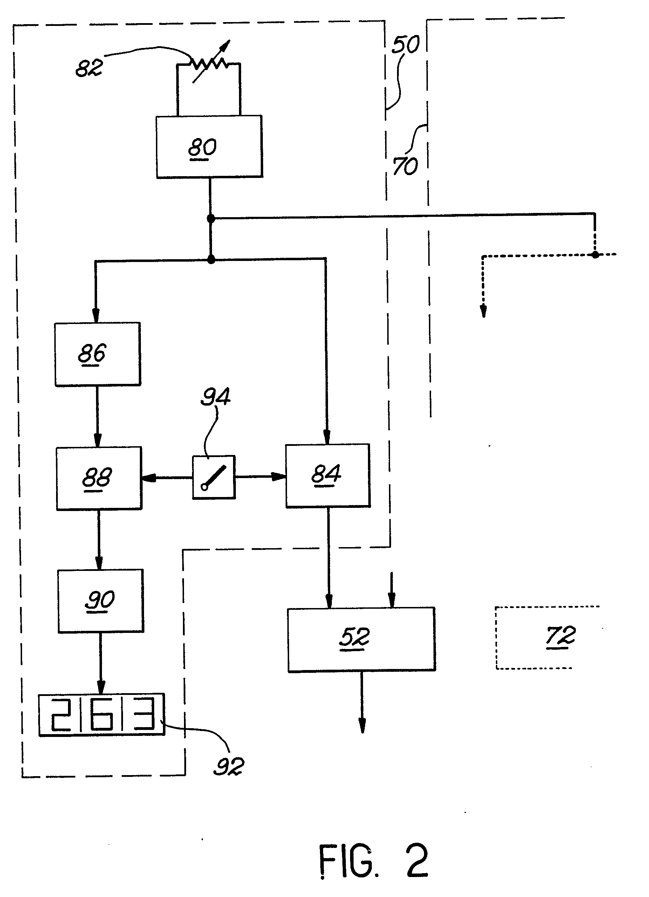

La fig. 2 représente un mode particulier de réalisation des moyens 50 et 70 pour sélectionner un nombre $N_1$ compris entre O et C. Le moyen représenté sur cette figure comprend un oscillateur astable 80 ayant une constante de temps réglable au moyen d'une résistance réglable 82, un compteur-décompteur 84 relié à cet oscillateur, un diviseur 86 par C/360 suivi d'un compteur 88 en décimal relié à un circuit 90 de décodage et de commande d'un afficheur 92, par exemple à sept segments. Les compteurs-décompteurs sont commandés par une clé 94 à trois positions : comptage-arrêt-décomptage. La sortie du compteur-décompteur 84 est appliquée sur l'entrée $E_1$ d'un comparateur (comparateur 52 ou 72 de la fig. 1).

Pour un fonctionnement basé sur un cycle à 512 points, le diviseur 86 délivre 360 impulsions de sortie pour 512 impulsions d'entrée. Chacune de ces impulsions représente donc 0,7° d'angle. Ces impulsions sont totalisées dans le compteur-décompteur 88 dont le contenu est affiché par le moyen 92. Le nombre $N_1$ souhaité est obtenu en plaçant la clé 94 sur la position comptage (ou le cas échéant sur la position décomptage) pour faire croître (ou décroître) le nombre totalisé jusqu'à l'obtention du nombre désiré, lequel est alors affiché par le moyen 92 directement en degrés.

Naturellement, si le moyen 70 est identique au moyen 50, un seul oscillateur astable 80 peut être utilisé pour ces deux moyens.

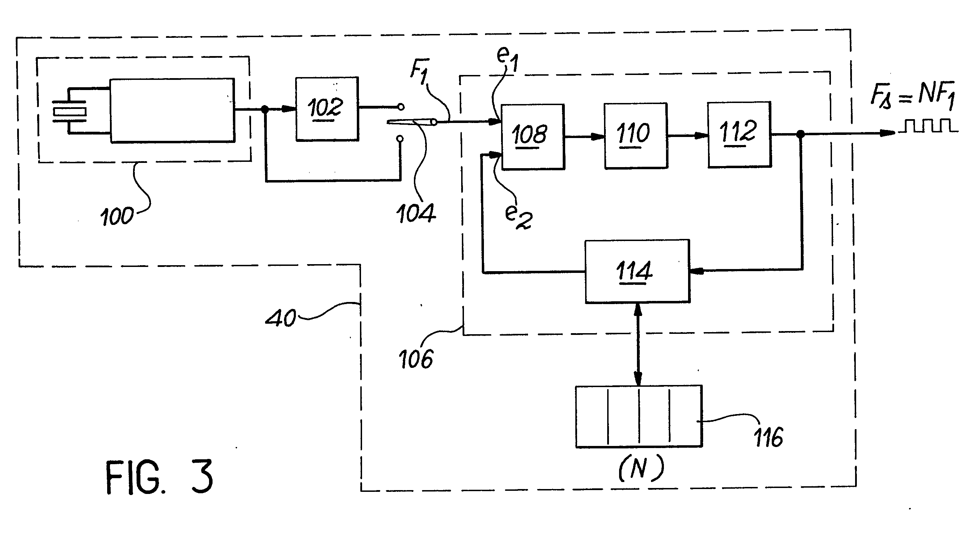

La fig. 3 représente un mode particulier de réalisation de l'oscillateur 40 délivrant des impulsions à la fréquence stabilisée Fs. Le circuit représenté sur cette figure comprend :

i) un ensemble 100 composé d'un oscillateur à quartz et d'un compteur, un circuit 102 diviseur par 10 et un commutateur 104. Cet ensemble délivre des impulsions à une fréquence $F_1$ ;

ii) une boucle de verrouillage de phase 106 comprenant de manière classique un comparateur de phase 108 à deux entrées $e_1$ et $e_2$, la première recevant les impulsions à la fréquence $F_1$, un filtre passe-bas 110 relié au comparateur de phase 108, un oscillateur 112 à commande par tension relié au filtre 110. La sortie de cet oscillateur est ramenée sur la deuxième entrée $e_2$ du comparateur de phase 108 à travers un diviseur réglable par un nombre N. Ce diviseur est associé à un organe d'affichage 116 du nombre N.

Le signal ainsi ramené possède une fréquence $F_2$. La sortie de l'oscillateur 40 délivre des impulsions à la fréquence Fs.

Le fonctionnement de ce circuit est classique. La fréquence $F_1$ déterminée par l'oscillateur-compteur 100 constitue une référence. Lorsque la fréquence $F_2$ du signal réinjecté à l'entrée $e_2$ du comparateur de phase 108 diffère de cette fréquence de référence appliquée sur l'entrée $e_1$, le comparateur de phase engendre un signal d'erreur qui est appliqué sur l'oscillateur 112, lequel corrige sa fréquence jusqu'à obtenir l'égalité entre $F_1$ et $F_2$. Du fait de la présence du diviseur 114 par N, à l'équilibre on a $F_1 = F_2 = Fs/N$ soit $Fs = NF_1$. On peut donc obtenir une fréquence Fs très stable et en même temps réglable par action sur le diviseur 114.

A titre explicatif, on peut employer comme boucle à verrouillage de phase 106, un circuit de type 4046 de la Société R.C.A. et comme diviseur un circuit 4059 de la même Société qui est un diviseur programmable à roues codeuses. N est alors le facteur de division affiché par les roues codeuses.

On observera que si C désigne encore la capacité du compteur 42, qui reçoit et compte les impulsions émises à la fréquence $Fs = NF_1$ par l'oscillateur 40, la fréquence F du générateur 16 est égale à Fs/C, soit $NF_1/C$.

Si l'on prend alors comme fréquence $F_1$ de l'oscillateur à quartz une fréquence exprimée en Hertz égale à la capacité C (ou à C/10), la fréquence F du générateur d'excitation deviendra toujours exprimée en Hertz, égale au facteur de division N (ou à N/10). Cette fréquence apparaît alors directement sur l'organe d'affichage 116.

## Revendications

1. Appareil pour le contrôle de pièces par courants de Foucault, comprenant :

— un capteur (10) constitué par un enroulement primaire (12) et un enroulement secondaire (14),

— un générateur numérique (16) de tension sinusoïdale d'excitation ayant une fréquence déterminée F, ce générateur alimentant l'enroulement primaire,

— un circuit (18) de correction pour supprimer la tension résiduelle délivrée par l'enroulement secondaire (14) du capteur, ce circuit comprenant un générateur (20) de tension d'équilibrage à la fréquence F de la tension d'excitation et d'amplitude et de phase réglables et un amplificateur différentiel (22) à deux entrées, l'une recevant la tension d'équilibrage et l'autre la tension délivrée par le capteur (10), et une sortie (24) délivrant une tension de mesure corrigée,

— un circuit (26) d'analyse de la tension de mesure corrigée, ce circuit comprenant deux échantillonneurs (28X, 28Y) travaillant à la fréquence F du générateur (16) et en quadrature de phase l'un par rapport à l'autre, ces échantillonneurs étant commandés par des impulsions élaborées par un moyen (30) approprié relié au générateur,

— un moyen (32) pour afficher les deux signaux délivrés par les deux échantillonneurs,

caractérisé en ce que :

A. le générateur de tension d'excitation comprend un oscillateur (40) émettant des impulsions à une fréquence stabilisée Fs, un premier compteur (42) de capacité maximale C relié audit oscillateur (40), une première mémoire (44) contenant une table de C valeurs numériques de la fonction sinus, cette mémoire étant adressée par le contenu du compteur (42), un premier convertisseur numérique-analogique (46) connecté à la mémoire (44), ce convertisseur délivrant une tension sinusoïdale de fréquence F = Fs/C qui est appliquée à l'enroulement primaire ;

B. le circuit de correction (18) comprend :

i) un premier moyen réglable (50) de sélection d'un nombre compris entre O et C, un premier comparateur (52) à deux entrées ($E_1$, $E_2$), l'une reliée à ce premier moyen (50) et l'autre à la sortie du premier compteur (42) du générateur, et à une sortie (54) délivrant une impulsion lorsque les nombres reçus par les deux entrées ($E_1$, $E_2$) sont égaux,

ii) un second compteur (56) identique au premier (42), ce compteur (56) recevant les impulsions délivrées par l'oscillateur (40) du générateur numérique (16) et possédant une entrée (58) de remise à zéro reliée à la sortie (54) du premier comparateur,

iii) une seconde mémoire (60) contenant une table de C valeurs numériques de la fonction sinus, cette mémoire étant adressée par le contenu du second compteur (56), un second convertisseur numérique-analogique (62) connecté à la mémoire (60) et un potentiomètre réglable (64) relié à la sortie du convertisseur (62),

C. le moyen (30) pour engendrer des impulsions de commande des échantillonneurs (28X, 28Y) comprend :

i) un second moyen (70) pour sélectionner un nombre compris entre O et C, un second comparateur numérique (72) à deux entrées ($E_1$, $E_2$) l'une reliée à ce second moyen (70) et l'autre au premier compteur (42) du générateur (16), et à une sortie (74) délivrant une impulsion (IX) lorsque les deux nombres reçus par les entrées sont égaux, cette sortie étant reliée directement à l'un (28X) des échantillonneurs,

ii) un déphaseur numérique constitué par un troisième compteur (76) relié à l'oscillateur (40) du générateur numérique (16), ce troisième compteur ayant une entrée de remise à zéro (78) qui est reliée à la sortie (74) du second comparateur (72), ce troisième compteur ayant une capacité maximale égale à C/4 et possédant une sortie (80) qui délivre une impulsion (IY) lorsque son contenu atteint la capacité maximale C/4, cette sortie (80) étant reliée à l'autre échantillonneur (28Y).

2. Appareil selon la revendication 1, caractérisé en ce que les premiers et seconds moyens réglables pour sélectionner un nombre compris entre O et C comprennent un oscillateur astable (80) ayant une constante de temps réglable manuellement et pour chaque moyen un compteur-décompteur (84) relié à cet oscillateur.

3. Appareil selon la revendication 2, caractérisé en ce que lesdits premier et second moyens pour sélectionner un nombre compris entre O et C comprennent en outre un moyen d'affichage comprenant un diviseur (86) par C/360 relié à l'oscillateur astable (80) suivi d'un compteur en décimal (88) commandant un afficheur (92).

4. Appareil selon la revendication 1, caractérisé en ce que l'oscillateur émettant des impulsions à la fréquence stabilisée Fs comprend :

i) un oscillateur à quartz associé à un compteur (100) et éventuellement à un circuit (102) diviseur par 10, l'ensemble délivrant des impulsions à une fréquence $F_1$,

ii) une boucle de verrouillage de phase (106) comprenant un comparateur de phase (108) à deux entrées ($e_1$, $e_2$), la première recevant les impulsions à la fréquence $F_1$, un filtre passe-bas (110) relié au comparateur de phase (108), un oscillateur (112) à commande par tension commandé par ce filtre (110), la sortie de cet oscillateur étant ramenée sur la deuxième entrée ($e_2$) du comparateur de phase (108) à travers un diviseur réglable par un nombre N, cette sortie délivrant alors des impulsions à la fréquence $Fs = NF_1$.

5. Appareil selon la revendication 4, caractérisé en ce que la fréquence $F_1$ de l'oscillateur à quartz exprimée en Hertz est égale à la capacité maximale C du premier compteur (ou à C/10), la fréquence F des impulsions émises par le générateur étant alors égale à N (ou à N/10) et en ce que le diviseur par N comprend un moyen d'affichage du nombre N qui donne alors directement la fréquence F du générateur.

**Claims**

1. Apparatus for inspecting articles by eddy currents, comprising :

— a pick-up (10) comprising a primary coil (12) and a secondary coil (14),
— a digital sine wave excitation potential generator (16) having a predetermined frequency F, said generator feeding the primary coil,
— a correction circuit (18) to eliminate residual potential delivered by the secondary coil (14) of the pick-up, said circuit comprising an equilibrating potential generator (20) having the frequency F of the excitation potential, and controllable amplitude and phase, and a two-input differential amplifier (22), one input receiving the equilibrating potential and the other the potential delivered by the pick-up (10), and one output delivering a corrected measurement potential,
— an analysis circuit (26) for the corrected measurement potential, said circuit comprising two samples (28X, 28Y) operating at the frequency F of the generator (16) and in phase quadrature with respect to one another, said samplers being commanded by pulses elaborated by an appropriate means (30) connected to the generator, and
— a means (32) for displaying the two signals delivered by the two samples,

characterized in that

A. the excitation potential generator comprises an oscillator (40) emitting pulses at a stabilized frequency Fs, a first counter (42) having a maximum capacity C connected to said oscillator (40), a first memory (44) containing a table of C digital values of the sine function, said memory being addressable by the content of counter (42), a first digital-analog converter (46) connected to the memory (44), said

**0 015 822**

converter delivering a sine-wave potential of frequency F = Fs/C which is supplied to the primary coil,

B. the correction circuit (18) comprises :

i) a first controllable means (50) for selecting a number between O and C, a first comparator (52) having two inputs ($E_1$, $E_2$), one connected to the first means (50) and the other to the output of the first counter (42) of the generator, and one output (54) delivering a pulse when the numbers received by the two inputs ($E_1$, $E_2$) are the same,

ii) a second counter (56) identical to the first (42), said counter (56) receiving pulses delivered by the oscillator (40) of the digital generator (16) and having an input (58) for resetting to zero connected to the output (54) of the first comparator,

iii) a second memory (60) containing a table of C digital values of the sine function, said memory being addressable by the content of the second counter (56), a second digital-analog converter (62) connected to the memory (60), and an adjustable potentiometer (64) connected to the output of the converter (62),

C. the means (20) to produce command pulses for the samples (28X, 28Y) comprises :

i) a second means (70) for selecting a number between O and C, a second digital comparator (72) having two inputs ($E_1$, $E_2$), one connected to the second means (70) and the other to the first counter (42) of generator (16), and one output delivering a pulse IX when the two numbers received by the inputs are the same, said output being directly connected to one of the samplers (28X),

ii) a digital phase converter comprising a third counter (76) connected to the oscillator (40) of the digital generator (16), said third counter having an input (78) for resetting to zero, which is connected to the output (74) of the second comparator (72) said third counter having a maximum capacity of C/4, and having an output (80) which delivers a pulse IY when its contents reach its maximum capacity C/4, said output being connected to the other sampler (28Y).

2. Apparatus according to Claim 1 characterized in that the first and second controllable means to select a number between O and C comprise an astable oscillator (80) having a manually-adjustable time constant, and for each means an up-down counter (84) connected to said oscillator.

3. Apparatus according to Claim 2 characterized in that the first and second means to select a number between O and C additionally comprise a display means comprising a divider by C/360 connected to the astable oscillator (80) followed by a decimal counter (88) commanding a meter (92).

4. Apparatus according to Claim 1 characterized in that the oscillator emitting pulses at the stabilized frequency Fs comprises :

i) a quartz oscillator associated with a counter (100) and a circuit (102) for dividing by 10, the assembly delivering pulses at a frequency $F_1$,

ii) a phase-locked loop circuit (106) comprising a phase comparator (108) having two inputs ($e_1$, $e_2$), the first receiving pulses having frequency $F_1$, a low pass filter (110) connected to the phase comparator (108), a voltage-controlled oscillator (112) commanded through filter (110), the output of said oscillator being connected to the second input ($e_2$) of the phase comparator (108) across a divider controllable by a number N, said output thereby delivering pulses at a frequency Fs = $NF_1$.

5. Apparatus according to Claim 4 characterized in that the frequency $F_1$ of the quartz oscillator expressed in Hertz is equal to the maximum capacity C of the first counter (or to C/10), the frequency F of the pulses emitted by the generator thereby being equal to N (or to N/10), and in that the divider by N comprises a means for displaying the number N, thus giving directly the frequency F of the generator.

**Ansprüche**

1. Gerät für die Überprüfung von Teilen durch Wirbelströme mit folgenden Merkmalen :

— einem Aufnehmer (10) mit einer primären Spule (12) und einer sekundären Spule (14),

— einem numerischen Generator (16) mit sinusförmiger Erregungsspannung von einer bestimmten Frequenz F, wobei der Generator die primäre Spule speist,

— einer Korrekturschaltung (18) zum Unterdrückung der durch die sekundäre Spule (14) des Aufnehmers gelieferten nacheilenden Spannung, wobei diese Schaltung einen Ausgleichsspannungs-Generator (20) mit der Frequenz F der Erregungsspannung und mit regelbarer Amplitude und Phase, einen differenziellen Verstärker (22) mit zwei Eingängen, von denen der eine die Ausgleichsspannung und der andere die vom Aufnehmer (10) gelieferte Spannung empfängt, und einen Ausgang (24) aufweist, der die korrigierte Meßspannung liefert,

— einer Analyseschaltung (26) für die korrigierte Meßspannung, wobei die Schaltung zwei Abtastschaltungen aufweist, die bei der Frequenz F des Generators (16) und in Quadratur der einen bezüglich der anderen Phase arbeiten, wobei die Abtastschaltungen durch Impulse gesteuert werden, die von einer Einrichtung (30) erfolgt werden, die in geeignetem Zusammenhang mit dem Generator steht,

— einer Einrichtung (32) zum Anzeigen der zwei von den zwei Abtastschaltungen gelieferten Signale,

dadurch gekennzeichnet,

8

A. daß der Erregungsspannungsgenerator einen Oszillator (40), der Impulse von einer stabilisierten Frequenz Fs aussendet, einen ersten Zähler (42) von einer maximalen Kapazität C in Zusammenhang mit dem genannten Oszillator (40), einen ersten Speicher (44), der eine Tafel von C numerischen Werten der Sinusfunktion enthält, wobei der Speicher durch den Inhalt des Zählers (42) adressiert wird, und einen ersten numerisch-analogen Umwandler (46) aufweist, der an den Speicher (44) angeschlossen ist, wobei der Umwandler eine sinusförmige Spannung der Frequenz $F = Fs/C$ liefert, die an die erste Spule angelegt ist,

B. daß die Korrekturschaltung (18) folgende Merkmale aufweist :

i) eine erste Einrichtung (50) zur Auswahl einer Zahl, die zwischen O und C enthalten ist, einen ersten Komparator (52) mit zwei Eingängen ($E_1$, $E_2$), von denen der eine an die erste Einrichtung (50) und der andere an den Ausgang des ersten Zählers (42) des Generators angeschlossen ist, und er hat einen Ausgang (54), der einen Impuls liefert, wenn die Zahlen, die durch die zwei Eingänge ($E_1$, $E_2$) empfangen werden, gleich sind,

ii) einen zweiten Zähler (56), der identisch zum ersten (42) ist, wobei dieser Zähler (56) die durch den Oszillator (40) des numerischen Generators (16) gelieferten Impulse empfängt und einen Eingang (58) zum Rücksetzen auf null aufweist, der mit dem Ausgang (54) des ersten Vergleichers verbunden ist,

iii) einen zweiten Speicher (60), der eine Tafel mit C numerischen Werten der Sinusfunktion enthält, wobei dieser Speicher durch den Inhalt des zweiten Zählers (56) adressiert wird, und einen zweiten numerisch-analogen Wandler (62) aufweist, der mit dem Speicher (60) verbunden ist, und ein verstellbares Potentiometer (64) hat, das mit dem Ausgang des Wandlers (62) verbunden ist,

C. und daß die Einrichtung (30) zum Erzeugen von Befehlsimpulsen für die Abtastschaltungen (28X, 28Y) folgende Merkmale aufweist :

i) eine zweite Einrichtung (70) zum Auswählen einer Zahl, die zwischen O und C enthalten ist, einen zweiten numerischen Komparator (72) mit zwei Eingängen ($E_1$, $E_2$), von denen der eine an dieser zweiten Einrichtung (70) und der andere an den ersten Zählern (42) des Generators (16) angeschlossen ist, und einen Ausgang (74) hat, der einen Impuls (IX) liefert, wenn die von den Eingängen empfangenen Zahlen gleich sind, wobei dieser Ausgang direkt an eine (28X) der Abtastschaltungen angeschlossen ist,

ii) einen numerischen Verschieber, der aus einem dritten Zähler (76) besteht, der an den Oszillator (40) des numerischen Generators (16) angeschlossen ist, wobei der dritte Zähler einen Eingang zum Rücksetzen auf null (78) hat, der an den Ausgang (74) des zweiten Komparators (72) angeschlossen ist, wobei der dritte Zähler eine maximale Kapazität hat, die gleich C/4 ist, und einen Ausgang (80) besitzt, der einen Impuls (IY) liefert, wenn sein Inhalt die maximale Kapazität C/4 erreicht, wobei der Ausgang (80) an die andere Abtastschaltung (28Y) angeschlossen ist.

2. Gerät nach Anspruch 1, dadurch gekennzeichnet, daß die ersten und zweiten regelbaren Einrichtungen zum Auswählen einer Zahl, die zwischen O und C enthalten ist, einen astabilen Oszillator (80) enthalten, der eine von Hand einstellbare Zeitkonstante hat, und daß für jede Einrichtung ein Aufwärts-Abwärts-Zähler (84), der an den Oszillator angeschlossen ist, vorgesehen ist.

3. Gerät nach Anspruch 2, dadurch gekennzeichnet, daß die genannten ersten und zweiten Einrichtungen zum Auswählen einer zwischen O und C enthaltenen Zahl unter anderem eine Anzeigeeinrichtung haben, die einen Teiler (86) durch C/360 aufweisen, der an den astabilen Oszillator (80) angeschlossen ist und von einem Dezimalzähler (88), der eine Anzeige (92) steuert, gefolgt wird.

4. Gerät nach Anspruch 1, dadurch gekennzeichnet, daß der die Impulse von einer stabiliserten Frequenz Fs aussendende Oszillator folgende Merkmale hat :

i) einen Quarzoszillator, der einem Zähler (100) zugeordnet ist und unter Umständen eine Teilungsschaltung (102), die durch zehn teilt, wobei das Ganze Impulse einer Frequenz $F_1$ liefert,

ii) eine einrastende Phasenregelschleife (106), die einen Phasenkomparator (108) mit zwei Eingängen ($e_1$, $e_2$) aufweist, wobei der erste die Impulse der Frequenz $F_1$ empfängt, einen Tiefpaßfilter (110), der an den Phasenkomparator (108) angeschlossen ist, und einen Oszillator (112) aufweist, zum Befehlen durch die Befehlsspannung von dem Filter (110), wobei der Ausgang des Oszillators durch den zweiten Eingang ($e_2$) des Phasenkomparators (108) über einen regelbaren Teiler, der durch die Zahl N teilt, wieder zurückgeführt wird, wobei der Ausgang daraufhin Impulse von der Frequenz $Fs = NF_1$ liefert.

5. Gerät nach Anspruch 4, dadurch gekennzeichnet, daß die Frequenz $F_1$ des Quarzoszillators ausgedrückt in Hertz gleich der maximalen Kapazität C des ersten Zählers (oder gleich C/10) ist, wobei die Frequenz F der durch den Generator vorausgeschickten Impulse nun gleich N ist (oder N/10), und daß der Teiler, der durch N teilt, eine Einrichtung zum Anzeigen der Zahl N enthält, die nun in direkter Weise die Frequenz F des Generators anzeigt.

FIG. 1

0 015 822

FIG. 2

FIG. 3

$F_{\lambda} = NF_1$